# EUROPEAN PATENT SPECIFICATION

(11) **EP 2 884 365 B1**
(45) Date of publication and mention of the grant of the patent: **11.09.2019**
(21) Application number: 14193760.7
(22) Date of filing: 18.11.2014
(51) Int. Cl.: F24H 9/20, F25D 17/02, F25D 29/00, G05D 23/19, B01L 7/02

(54) **Recirculating bath with global voltage compatibility**
Rückführungsbad mit globaler Spannungsverträglichkeit
Bain de recirculation à compatibilité de tension globale

(30) Priority: 22.11.2013 US 201314087576
(43) Date of publication of application: 17.06.2015
(73) Proprietor: Thermo Fisher Scientific (Asheville) LLC, Asheville, NC 28804 (US)
(72) Inventor: Parker, John Loring, Eliot, ME Maine 03903 (US); Given, Robert A., Salem, NH New Hampshire 03079 (US); Stocker, Joseph Albert, Dover, NH New Hampshire 03820 (US)
(74) Representative: Sharrock, Daniel John

(56) References cited:
- KR-A- 20090 122 890
- US-A- 5 483 149
- US-A1- 2004 216 862
- US-A1- 2012 168 426

## Description

### FIELD OF THE INVENTION

The present invention relates generally to recirculating baths and, more particularly, to recirculating baths configured to operate with voltages provided by power grids in different regions.

### BACKGROUND OF THE INVENTION

Recirculating baths are used in laboratory settings to provide a controlled temperature working liquid, such as water, in a reservoir. The end user may utilize the recirculating bath by placing their application in the reservoir or by circulating the working liquid between the reservoir and an external application. Use of conventional recirculating bath applications includes placing beakers or other containers in a work area of the bath reservoir, and controlling the temperature of an external vessel. To control the temperature of the working liquid, the recirculating bath moves the liquid past heating or cooling elements so as to achieve a uniform desired temperature.

Conventional recirculating baths typically include a reservoir for receiving the working liquid, a cooling unit for removing heat from the working liquid, a heating unit for adding heat to the working liquid, a recirculating pump for circulating the working liquid, and a controller. In operation, the controller selectively activates the cooling unit, heating unit, and recirculating pump to maintain the temperature of the working liquid at a desired level. Recirculating baths operate off of electrical power, with the main power consuming components typically including the cooling unit, heating unit, and recirculating pump. For example, the cooling unit typically includes an Alternating Current (AC) electric motor that provides motive power to a compressor. The compressor circulates a refrigerant through a series of evaporating and condensing heat exchangers to remove heat from the working liquid. The cooling unit may also include electric fans to improve heat transfer from the condensing heat exchanger to the ambient environment. The recirculating pump similarly receives motive power from an AC electric motor, and the heater draws AC current that is passed through resistive heating elements that convert the electric power into heat.

Recirculating baths normally receive power from the local power grid through one or more power outlets where the recirculating bath is being operated. However, power grid voltages vary widely from one region to another. For example, in the United States and Canada, outlet power is typically supplied at either 115 or 208 volts at a frequency of 60 Hz. In contrast, power in Europe is supplied at 230 volts at a frequency of 50 Hz, and power in Japan may be at 100 or 200 volts at either 50 or 60 Hz. To accommodate this wide variation in voltages, conventional recirculating baths are configured for the region in which they will be used. To this end, the AC electric motors and heating elements may be selected based on the electric power available in the region where the recirculating bath is to be used. As a result, manufacturers of recirculating baths that sell their products to a global market must maintain an inventory that includes multiple versions of their products. This not only creates a need to track and stock multiple units, but also multiple types of replacement parts. Thus, providing recirculating baths to regions having different power grid standards increases costs for manufacturers and distributors. KR 2009-0122890 discloses a recirculating cooling system. US 5483149 concerns a resistive heating control system.

Hence, there is a need for improved recirculating baths that can be operated using the electrical power available in various regions of the globe without custom parts or other hardware variations between regions.

### SUMMARY OF THE INVENTION

The present invention overcomes the foregoing problems and other shortcomings, drawbacks, and challenges of recirculating baths. While the invention will be described in connection with certain embodiments, it will be understood that the invention is not limited to these embodiments.

The invention is defined by independent claims 1 and 8. In the present invention, a recirculating bath is provided including a main power input configured to receive an alternating current, and a heating element that is selectively coupled to the main power input in
response to an activation signal. The activation signal has a duty cycle that is set based on a voltage of the alternating current at the main power input, thereby adapting the recirculating bath to the voltage of the alternating current.

In another embodiment of the present invention, a method of operating the recirculating bath is provided. The method includes determining the voltage of the alternating current at the main power input of the recirculating bath with a controller. The method may then set the duty cycle of the activation signal based on the voltage, and selectively couple the heating element to the main power input by generating the activation signal.

In another embodiment of the present invention, a recirculating bath that provides a working liquid at a desired temperature is provided. The recirculating bath includes the heating element, which is thermally coupled to the working liquid, a recirculating pump configured to circulate the working liquid, and the main power input. The recirculating bath may further include a controller configured to generate the activation signal having the duty cycle based on the voltage of the alternating current. The controller may be further configured to selectively couple the heating element to the main power input using the activation signal to maintain the working liquid at the desired temperature. A power unit having an input coupled to the main power input may have an output that provides a direct current voltage that is substantially independent of the voltage of the alternating current. A direct current motor receiving a direct current voltage from the power unit may be coupled to the recirculating pump to provide torque to the recirculating pump.

### BRIEF DESCRIPTION OF THE DRAWINGS

The accompanying drawings, which are incorporated in and constitute a part of this specification, illustrate embodiments of the invention and, together with the general description of the invention given above, and the detailed description of the invention given below, serve to explain the principles of the invention.
FIG. 1 is a perspective view of an exemplary recirculating bath in accordance with an embodiment of the present invention.
FIG. 2 is a schematic view of the recirculating bath of FIG. 1 including a controller, a heating element, and an immersion pump in accordance with an embodiment of the present invention.
FIG. 2A is a schematic view of the recirculating bath of FIG. 2 showing additional details of the immersion pump in accordance with an embodiment of the present invention.
FIG. 3 is a flow chart of a process by which the controller of FIG. 2 may adjust a duty cycle of an activation signal to enable the heating element to be coupled to power grid voltages from different regions in accordance with an embodiment of the present invention.

### DETAILED DESCRIPTION OF THE PREFERRED EMBODIMENT

Embodiments of the present invention include a global voltage feature that allows a recirculating bath to operate using alternating current (AC) voltages provided by power grids in the United States, Japan, and Europe. The global voltage feature uses a direct current (DC) power supply to convert input voltages between 90-264 volts to a regulated DC voltage. The DC voltage is then used to operate the controller electronics, cooling unit, and recirculating pump motor. The heating unit runs off the line voltage to reduce the load on the DC power supply, and is de-rated by the controller based on a detected input AC voltage level.

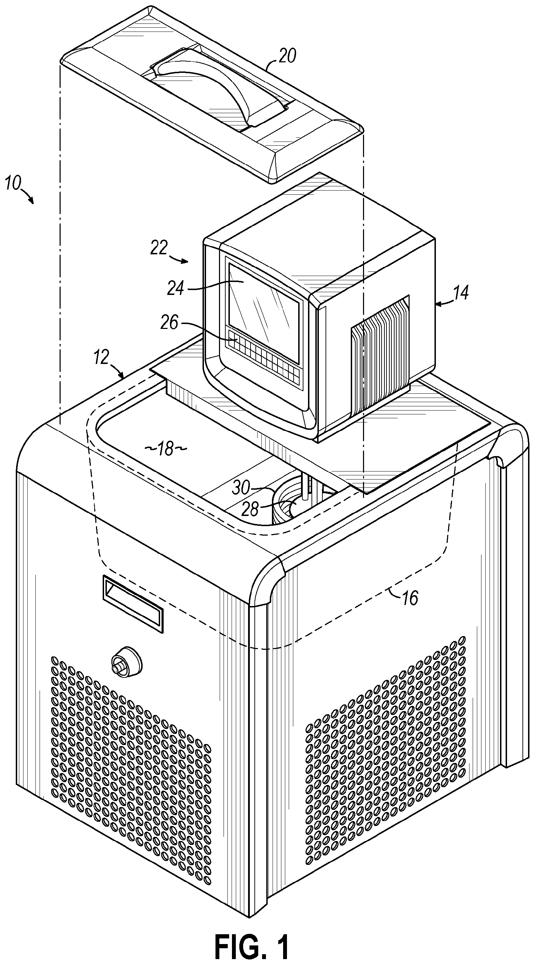

Referring now to FIG. 1, and in accordance with an embodiment of the present invention, an exemplary recirculating bath 10 may include a base unit 12 and a head unit 14. The base unit 12 includes a reservoir 16 that can be accessed through an opening 18 to add or remove specimens from a working area of the reservoir 16. The base unit 12 may also include a cover or lid 20 that covers the opening 18 when access to the reservoir 16 is not needed. The head unit 14 may provide access to a Human Machine Interface (HMI) 22 having a display 24 and a means of entering data, such as exemplary keypad 26. The HMI 22 may thereby enable the user to control operation of the recirculating bath 10 by providing operating instructions, such as a desired operating temperature, to the recirculating bath 10. An immersion pump 28 and heating element 30 may be suspended below the head unit 14 so that they are located in the reservoir 16.

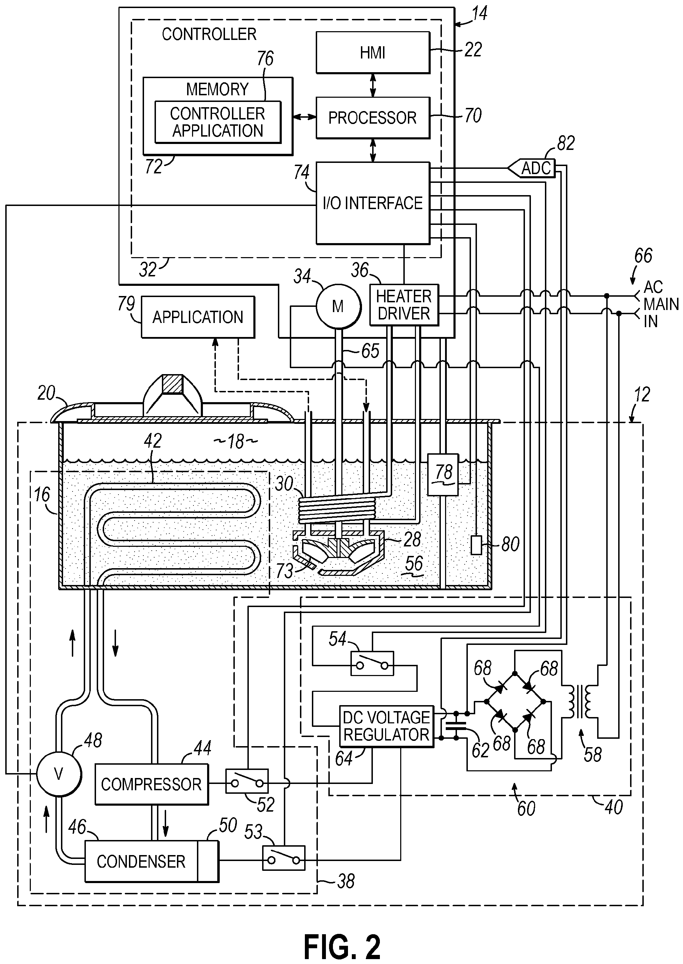

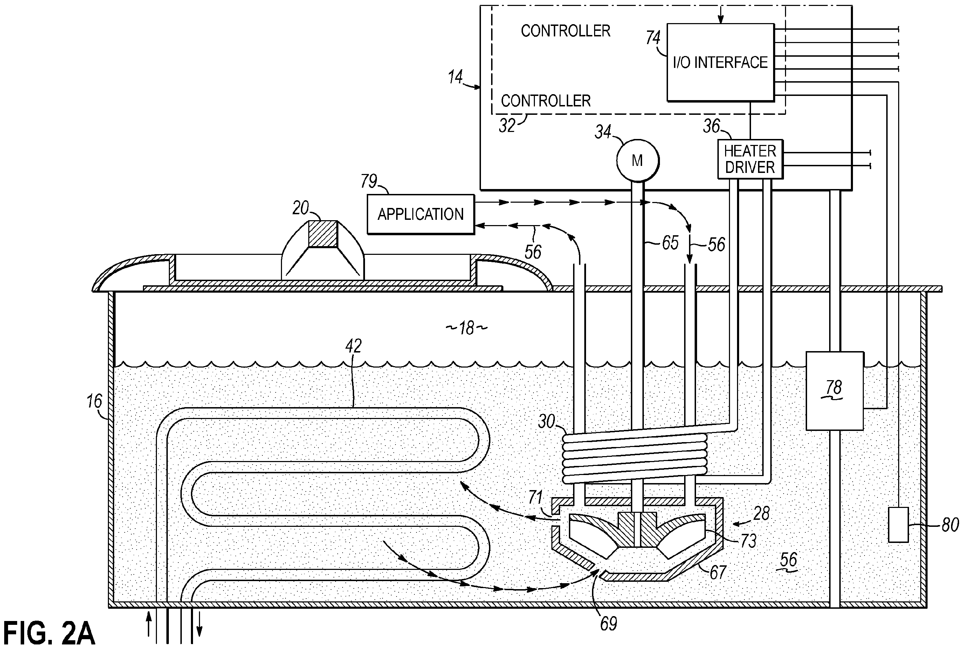

Referring now to FIGS. 2 and 2A, schematic diagrams are presented that illustrate the recirculating bath 10 in more detail. The head unit 14 may include a controller 32, a DC pump motor 34, and a heater driver 36, which may comprise a solid state relay or other suitable switching device. The base unit 12 may include the reservoir 16, a cooling unit 38, and a power unit 40. The cooling unit 38 may include an evaporator coil 42, a compressor 44 having a DC motor, a condenser 46, and an expansion valve 48 or other suitable restriction device. A cooling fan 50 having a DC motor may be configured to circulate air over the condenser 46 to help remove heat produced by the cooling unit 38.

Each of the compressor 44 and cooling fan 50 may be coupled to the power unit 40 by a corresponding relay or switch 52, 53 that is operatively coupled to the controller 32. An additional switch 54 may similarly couple the DC pump motor 34 to the power unit 40 so that the controller 32 can selectively activate the DC pump motor 34 via operation of the switch 54. In operation, the controller 32 may selectively activate the switches 52, 53 so that the compressor 44 circulates refrigerant through the components of the cooling unit 38 in a known manner to remove heat from a working liquid 56 in the reservoir 16. The controller 32 may control the amount of heat removed from the working liquid 56 by selectively opening and closing the expansion valve 48 to control the flow of refrigerant through the evaporator coil 42. In an alternative embodiment of the present invention, the controller 32 may control amount of heat removed from the working liquid 56 by cycling the compressor 44 and/or cooling fan 50 on and off, or by a combination of selectively opening the expansion valve 48 and/or cycling the compressor 44. Embodiments of the present invention are therefore not limited to a particular method of controlling the amount of heat removed from the working liquid 56 by the cooling unit 38.

The power unit 40 may include a transformer 58, a rectifier 60, a charge storage device, such as a capacitor 62, and a DC voltage regulator 64. The transformer 58 may couple power from an AC main power input 66 to the rectifier 60. The rectifier 60 may include diodes 68 or other electronic valves configured to convert power received from the AC main power input 66 into DC power. The capacitor 62 may store and release portions of the DC power produced by the rectifier 60, thereby reducing variations in the voltage provided to the DC voltage regulator 64. The output of the rectifier 60 may be coupled to the DC voltage regulator 64, which may provide one or more regulated DC voltages for use in powering the controller 32, DC pump motor 34, compressor 44, and cooling fan 50. To this end, the DC voltage regulator 64 may include voltage regulation circuits, DC-DC converters, electromechanical regulators, power filtering circuits, or any other suitable circuits for converting the DC power received from the rectifier 60 into DC power suitable for operating selected components of the recirculating bath 10. For example, the DC voltage regulator 64 may be configured to output one or more of 12, 24, or 48 volts DC.

As best shown in FIG. 2A, the immersion pump 28 may be any suitable pump, such as a centrifugal pump, and may be coupled to the DC pump motor 34 by a shaft 65. The exemplary immersion pump 28 depicted includes a pump casing 67 having an intake port 69 and an output port 71. The pump casing 67 encloses an impeller 73 that is operatively coupled to the shaft 65. Rotation of the DC pump motor 34 may cause the impeller 73 to rotate within the pump casing 67. The impeller 73 may thereby draw the working liquid 56 into the intake port 69 and expel the working liquid 56 from the output port 71 so that the working liquid 56 is circulated by the immersion pump 28.

The DC pump motor 34, as well as the DC motors of the compressor 44 and cooling fan 50, may be any suitable type of DC motor. Suitable DC motors may include brushed or internally commutated motors, as well as brushless or electronically commutated motors. In embodiments of the present invention using one or more brushless DC (BLDC) electric motors, commutation may be performed by one or more electronic commutators (not shown). When present, the electronic commutators may be integrated with their respective DC motors, or may be external to the DC motors. In either case, the electronic commutators may include drive circuits, such as a variable frequency drive circuit, configured to control the rotational speed of the DC motor in a known manner. A person having ordinary skill in the art would therefore understand that the output of the DC voltage regulator 64 may be coupled to the DC motors by one or more commutators instead of, or in addition to, the switches 52, 53. Electronic commutators could also be integrated with or otherwise provided by other components of the recirculating bath 10, such as the controller 32 or power unit 40.

In an embodiment of the present invention, tubular members 75, 77 may be fluidically coupled to the pump casing 67 in such a way that rotation of the impeller 73 urges at least a portion of the working liquid 56 drawn into the pump casing 67 into one of the tubular members 75, and draws working liquid 56 out of the other tubular member 77. The tubular members 75, 77 may thereby provide a source of working liquid 56 for an external application 79 having a temperature controlled by circulation of the working liquid 56. An exemplary immersion pump for supplying working liquid to an application is described in more detail in U.S. Patent Application Publication No. 2012/0263608, entitled "PUMP CASING AND RELATED APPARATUS AND METHODS", filed on November 4, 2011.

The controller 32 may include the HMI 22, a processor 70, a memory 72, and an input/output (I/O) interface 74. The processor 70 may include one or more devices selected from microprocessors, micro-controllers, digital signal processors, microcomputers, central processing units, field programmable gate arrays, programmable logic devices, state machines, logic circuits, analog circuits, digital circuits, or any other devices that manipulate signals (analog or digital) based on operational instructions that are stored in the memory 72. Memory 72 may be a single memory device or a plurality of memory devices including, but not limited to, read-only memory (ROM), random access memory (RAM), volatile memory, non-volatile memory, static random access memory (SRAM), dynamic random access memory (DRAM), flash memory, cache memory, or any other device capable of storing digital information. Memory 72 may also include a mass storage device (not shown) such as a hard drive, optical drive, tape drive, non-volatile solid state device or any other device capable of storing digital information.

Processor 70 may execute program code embodied as one or more computer software applications, such as a controller application 76 residing in memory 72. The controller application 76 may be configured to cause the controller 32 to operate the recirculating bath 10 in a desired manner based on
input received from the HMI 22 and/or programming instructions stored in memory 72. The I/O interface 74 may operatively couple the processor 70 to other components of the recirculating bath 10, such as the heater driver 36, switches 52-54, the expansion valve 48, a level sensor 78, a temperature sensor 80, and an analog-to-digital converter (ADC) 82.

The level and temperature sensors 78, 80 may be located in the reservoir 16 to generate signals indicative of the level and temperature of the working liquid 56, respectively. These signals may be provided to the controller 32 via the I/O interface 74 for use in controlling the recirculating bath 10. The ADC 82 may be coupled to the output of the rectifier 60 to provide a signal to the controller 32 indicative of the voltage on the AC main power input 66. Although shown as a separate component in FIG. 2, persons having ordinary skill in the art would understand that the ADC 82 could be integrated into the processor 70 and/or I/O interface 74. The ADC 82 could also be configured to sample the AC main input voltage through a voltage divider or other suitable coupling circuit.

The I/O interface 74 may include signal processing circuits that condition incoming and outgoing signals so that the signals are compatible with both the processor 70 and the components to which the processor 70 is coupled. To this end, the I/O interface 74 may include analog to digital (A/D) and/or digital to analog (D/A) converters (such as the aforementioned ADC 82), voltage level and/or frequency shifting circuits, optical isolation and/or driver circuits, and/or any other analog or digital circuitry suitable for coupling the processor 70 to the other components of the recirculating bath 10.

The HMI 22 may be operatively coupled to the processor 70 of controller 32 in a known manner to allow the user to interact with the controller 32. To this end, the HMI 22 may include output devices, such as the display 24, a touch screen, a speaker, and other audio and visual indicators. The HMI 22 may also include input devices and controls, such as the keypad 26, an alphanumeric keyboard, a pointing device, pushbuttons, control knobs, microphones, etc., capable of accepting commands or input from the operator and transmitting the entered input to the processor 70.

The controller application 76 may be configured to receive user input from the HMI 22, such as input indicating a desired temperature of the working liquid 56. The controller application 76 may compare this desired temperature to the actual temperature of the working liquid 56, which may be determined from the signal provided by the temperature sensor 80. The difference in temperature between the desired temperature and the actual temperature may generate an error signal. The controller application 76 may process this error signal using a suitable control algorithm, such as a Proportional-Integral-Derivative (PID) or thermostatic algorithm, to determine if one or more of the heating element 30, DC pump motor 34, compressor 44 of cooling unit 38, or expansion valve 48 should be activated. The controller application 76 may thereby control the temperature and/or circulation of the working liquid 56.

The level sensor 78 may provide a signal to the controller 32 indicative of the level of the working liquid 56 in the reservoir 16. The controller 32 may thereby determine if the recirculating bath 10 has sufficient working liquid 56 for operation. In response to the controller 32 determining that there is not a sufficient amount of working liquid 56, the controller 32 may shut off the recirculating bath 10 and/or generate an alarm that alerts the user.

A person having ordinary skill in the art would understand that the configuration illustrated by FIG. 2 is for exemplary purposes only, and embodiments of the invention are not limited by the configuration shown. For example, the DC pump motor 34, controller 32, and heater driver 36 could be located in the base unit 12. In addition, although the immersion pump 28, heating element 30, and evaporator coil 42 are shown as "wet" components that are immersed in the reservoir 16, alternative embodiments of the invention may locate one or more of these components externally to the reservoir 16. One such recirculating bath is described in concurrently-filed U.S. Patent Application Serial No. 14/489,209, entitled "Recirculating Bath", Attorney Docket No. TFLED-632US (US2015/0144206).

By providing regulated DC power to the DC pump motor 34, controller 32, compressor 44, and cooling fan 50, embodiments of the invention may allow the recirculating bath 10 to operate with a range of AC main input voltages, e.g., 90V to 256V. In contrast, the heating element 30 is powered by coupling the heating element to the AC main power input 66 with the heater driver 36, which by-passes the power unit 40. The current drawn by the heating element 30 therefore does not pass through the power unit 40, significantly reducing the capacity requirements, and thus the size and cost, of the power unit 40. Advantageously, this may reduce the cost of the power unit 40, as well as increase the overall efficiency of the recirculating bath 10 as compared to a recirculating bath which attempted to power the heating element 30 with the output of the power unit 40. Because the recirculating bath 10 may be operated over the wide range of power grid voltages and frequencies available in various regions of the world, the embodiments of the present invention may be considered "global".

The DC pump motor 34, compressor 44, and cooling fan 50 may be configured to be powered by a suitable output voltage provided by the power unit 40, such as 12, 24, or 48 VDC, for example. However, because the heating element 30 would need to draw correspondingly higher amounts of current to provide the same amount of heat at lower input voltages, sizing the power unit 40 to provide sufficient current at 12, 24, or even 48 VDC to operate the heating element 30 would be impractical.

To enable the heating element 30 to operate with varying power grid voltages, the controller 32 may detect the input voltage and de-rate the heating element 30 to prevent excessive current draw at higher voltages. The heater power may thereby be automatically adjusted to the maximum allowed by the recirculating bath's amperage rating. The amperage rating of the recirculating bath 10 may be dependent on the size of the cord coupling the recirculating bath 10 to the power grid, or by a maximum current that is normally available from an outlet coupling the recirculating bath 10 to the power grid. The amperage rating of the recirculating bath 10 may also be determined by common circuit breaker sizes at installation. Embodiments of the present invention are therefore not limited to any particular amperage rating, and could thus be applied to any arbitrary rating.

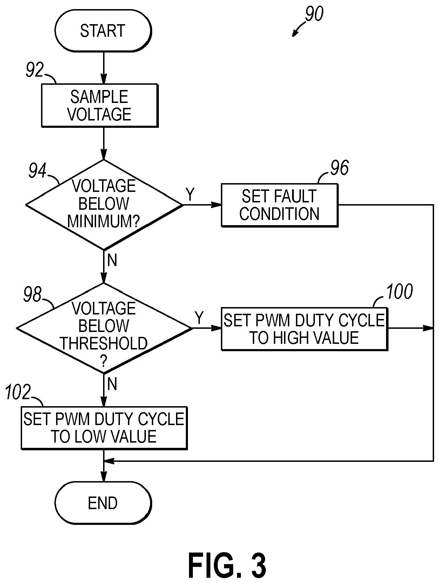

Referring now to FIG. 3, a flow chart illustrates a process 90 that may be implemented by the controller application 76 to adjust an activation signal used to activate the heating element 30. This adjustment may be made in response to changes in the voltage coupled to the AC main power input 66. In block 92, the process 90 may sample the voltage of the AC main power input 66. The voltage on the AC main power input 66 may be determined, for example, based on the output of the rectifier 60 of power unit 40. The rectifier output voltage may have a known relationship to the peak voltage at the AC main power input 66. This known relationship may be based on characteristics of the transformer 58 and rectifier 60. The ADC 82 may convert the rectifier output voltage into a digital signal suitable for use in the processor 70. In an alternative embodiment of the invention, the voltage may be sampled at the output of the transformer 58, or at the AC main power input 66 via a suitable coupling circuit, such as a voltage divider.

In response to sampling the voltage in block 92, the process 90 may proceed to block 94. In block 94, the input voltage sample may be compared to a lower threshold value. The lower threshold value may be a numerical value that corresponds to a minimum input voltage required to operate the recirculating bath 10. For example, the minimum threshold may correspond to a root mean square (RMS) voltage on the AC main power input of 90 volts, which would correspond to a peak voltage of about 127 volts for an AC voltage having a sinusoidal waveform.

In response to the input voltage sample being below the lower threshold value ("YES" branch of decision block 94), the process 90 may proceed to block 96 and set a fault condition in the controller 32. This fault condition may cause the controller application 76 to provide an indication on the HMI 22 that the input voltage is insufficient to operate the recirculating bath 10. If the voltage is not below the lower threshold ("NO" branch of decision block 94), the process 90 may proceed to block 98.

In block 98, the process 90 may compare the input voltage sample to an upper threshold value. The upper threshold value may correspond to an input voltage above which coupling the heating element 30 to the AC main power input 66 in a continuous manner would cause the recirculating bath 10 to draw an excessive amount of current. If the input voltage sample is below the upper threshold ("YES" branch of decision block 98), the process 90 may proceed to block 100. In block 100, the process 90 may set a Pulse Width Modulation (PWM) duty cycle for the activation signal to a high value, such as 100%. Thus, in response to the input voltage sample being between the lower threshold and the upper threshold, the controller application 76 may select an activation signal for the heater driver 36 that couples the heating element 30 to the AC main power input 66 for a relatively large portion of the activation time. For example, the activation signal may be a continuous or DC signal that maintains the heater driver 36 in a conductive state so long as the activation signal is active.

If the input voltage sample is above the upper threshold ("NO" branch of decision block 98), the process 90 may proceed to block 102. In block 102, the process 90 may set the PWM duty cycle in the controller 32 to a low value, such as 50%. Thus, in response to the input voltage sample being between above the upper threshold, the controller application 76 may select an activation signal for the heater driver 36 that couples the heating element 30 to the AC main power input 66 for a relatively smaller portion of the activation time. For example, the activation signal may be a time varying signal, such as a square wave, that puts the heater driver 36 in the conductive state for approximately 50% of the time the activation signal is provided to the heater driver 36. The frequency of this time varying activation signal may be sufficiently high so that the average current draw of the heating element 30 does not exceed the limitations of either the line voltage circuit or the components of the recirculating bath 10 while the activation signal is being provided to the heater driver 36.

Although the process 90 is described herein as having two activation signal duty cycles (e.g., a high value and a low value duty cycle), a person having ordinary skill in the art would understand that more than two activation signal duty cycles, or even a continuously variable activation signal duty cycle, could be implemented. Embodiments of the present invention are therefore not limited to any particular number of activation signal duty cycles.

The process 90 may be repeated at regular intervals, or even continuously, by the controller application 76 while the recirculating bath 10 is in operation. By adjusting the duty cycle of the heater driver activation signal based on the voltage on the AC main power input 66, embodiments of the present invention may allow the heating element 30 to be operated with power grid voltages available globally.

The global voltage compatibility provided by embodiments of the present invention may allow customers to buy one type of recirculating bath 10 without first determining the specific region in which it will be used. Advantageously, this may allow customers having global operations to buy and stock one type of recirculating bath 10. More advantageously, Original Equipment Manufacturers (OEMs) may be able to test the recirculating bath 10 in one region of the world and then ship the final product to another region without having to provide specific types of power. Recirculating bath manufacturers may also be able to build and stock a single global model rather than multiple variations, which may reduce lead-times. Having a single global model may also improve demand forecasts since the effects of a slow-down in one region on total inventory may be offset by demand in other regions. Further advantages may be provided due to sourcing being able to buy fewer types of parts in higher quantities. The reduced number of transactions and higher quantity orders may allow for negotiation of lower prices as well as more consistent part inventories.

While the present invention has been illustrated by the description of the embodiments thereof, and while the embodiments have been described in considerable detail, it is not the intention of the applicant to restrict or in any way limit the scope of the appended claims to such detail. Additional advantages and modifications will readily appear to those skilled in the art. Therefore, the invention in its broader aspects is not limited to the specific details of the representative apparatus and method, and illustrative examples shown and described. Accordingly, departures may be made from such details without departing from the scope of the invention.

## Claims

1. A recirculating bath (10), comprising:
a main power input (66) configured to receive an alternating current;
a heating element (30) that is selectively coupled to the main power input in response to an activation signal, the activation signal having a duty cycle set based on a voltage of the alternating current at the main power input (40), and
a power unit having an input and an output, the input being coupled to the main power input, the output providing at least one direct current voltage having a value substantially independent of the voltage of the alternating current at the main power input, the direct current voltage providing power to a direct current motor (34) that is selectively coupled to the output of the power unit, the direct current motor providing torque to at least one of a compressor (44), a recirculating pump (28), and a fan (50)in response to being coupled to the output of the power unit.

2. The recirculating bath according to claim 1, further comprising:
a reservoir (16) for receiving a working liquid; and
a cooling unit (38) for cooling the working liquid, the cooling unit including the compressor and an evaporator coil (42).

3. The recirculating bath according to claim 1, further comprising:
a reservoir (16) for receiving a working liquid; and
the recirculating pump for circulating the working liquid, wherein the recirculating pump is an immersion pump (28) located in the reservoir.

4. The recirculating bath according to any of claims 1 to 3, further comprising a controller (32) configured to:
determine the voltage of the alternating current at the main power input;
set the duty cycle of the activation signal based on the determined voltage; and
selectively couple the heating element to the main power input using the activation signal.

5. The recirculating bath according to claim 4, further comprising a heater driver (36) connected between the heating element (30) and the main power input (66), wherein the controller selectively couples the heating element to the main power input by applying the activation signal to the heater driver.

6. The recirculating bath according to claim 4 or 5, further comprising:
a reservoir (16) configured to receive a working liquid, the controller (32) being configured to selectively couple the heating element to the main power input (66) to maintain the working liquid at a desired temperature.

7. The recirculating bath according to any of claims 1 to 3, further comprising a controller (32) configured to:
determine the voltage at the main power input;
compare the voltage to a threshold;
in response to the voltage being below the threshold, set the duty cycle of the activation signal to a first value; and
in response to the voltage not being below the threshold, set the duty cycle of the activation signal to a second value different from the first value.

8. A method of operating a recirculating bath, the method comprising:
determining, with a controller (32), a voltage of an alternating current at a main power input of the recirculating bath;
setting, with the controller, a duty cycle of an activation signal based on the voltage;
selectively coupling a heating element to the main power input by the controller generating the activation signal;
generating, with a power unit coupled to the main power input, a direct current voltage having a value substantially independent of the voltage of the alternating current at the main power input; and
selectively coupling a direct current motor to the direct current voltage, the direct current motor providing torque to at least one of a compressor, a recirculating pump, or a fan in response to being coupled to the direct current voltage.

9. The method according to claim 8, wherein setting the duty cycle of the activation signal based on the voltage comprises:
comparing the voltage to a threshold;
in response to the voltage being below the threshold, setting the duty cycle of the activation signal to a first value; and
in response to the voltage not being below the threshold, setting the duty cycle of the activation signal to a second threshold different from the first threshold.

10. The method according to claim 8 or 9, further comprising:
receiving a temperature signal at the controller, the temperature signal indicative of a temperature of a working liquid;
comparing the temperature of the working liquid to a desired temperature; and
determining an amount of time to generate the activation signal based on the comparison.

## Patentansprüche

1. Rezirkulationsbad (10), umfassend:
eine Hauptleistungsaufnahme (66), die zum Empfangen eines Wechselstroms konfiguriert ist;
ein Heizelement (30), das selektiv mit der Hauptleistungsaufnahme als Reaktion auf ein Aktivierungssignal gekoppelt ist, wobei das Aktivierungssignal ein Tastverhältnis aufweist, das auf einer Spannung des Wechselstroms am Hauptleistungseingang (40) basiert, und
eine Leistungseinheit mit einem Eingang und einem Ausgang, wobei der Eingang mit dem Hauptleistungseingang gekoppelt ist, wobei der Ausgang mindestens eine Gleichspannung mit einem Wert bereitstellt, der im Wesentlichen unabhängig von der Spannung des Wechselstroms am Hauptleistungseingang ist, wobei die Gleichspannung einen Gleichstrommotor (34) mit Strom versorgt, der selektiv mit dem Ausgang der Leistungseinheit gekoppelt ist, wobei der Gleichstrommotor Drehmoment für mindestens einen Kompressor (44), eine Umwälzpumpe (28) und einen Ventilator (50) als Reaktion auf das Koppeln mit dem Ausgang der Leistungseinheit bereitstellt.

2. Rezirkulationsbad nach Anspruch 1, ferner umfassend:
einen Behälter (16) zum Aufnehmen einer Arbeitsflüssigkeit; und
eine Kühleinheit (38) zum Kühlen der Arbeitsflüssigkeit, wobei die Kühleinheit den Kompressor und eine Verdampferspule (42) beinhaltet.

3. Rezirkulationsbad nach Anspruch 1, ferner umfassend:
einen Behälter (16) zum Aufnehmen einer Arbeitsflüssigkeit; und
die Umwälzpumpe zum Umwälzen der Arbeitsflüssigkeit, wobei die Umwälzpumpe eine Tauchpumpe (28) ist, die im Speicher angeordnet ist.

4. Rezirkulationsbad nach einem der Ansprüche 1 bis 3, ferner umfassend eine Steuerung (32), die konfiguriert ist zum:
Bestimmen der Spannung des Wechselstroms am Hauptstromeingang;
Einstellen des Tastverhältnisses des Aktivierungssignals basierend auf der bestimmten Spannung; und
selektiven Koppeln des Heizelements mit der Hauptleistungsaufnahme über das Aktivierungssignal.

5. Rezirkulationsbad nach Anspruch 4, ferner umfassend einen Heizungsantrieb (36), der zwischen dem Heizelement (30) und der Hauptleistungsaufnahme (66) verbunden ist, wobei die Steuerung das Heizelement selektiv mit der Hauptleistungsaufnahme koppelt, indem sie das Aktivierungssignal an den Heizungsantrieb anlegt.

6. Rezirkulationsbad nach Anspruch 4 oder 5, ferner umfassend:
einen Speicher (16), der zum Aufnehmen einer Arbeitsflüssigkeit konfiguriert ist, wobei die Steuerung (32) konfiguriert ist, um das Heizelement selektiv mit dem Hauptleistungseingang (66) zu koppeln, um die Arbeitsflüssigkeit auf einer gewünschten Temperatur zu halten.

7. Rezirkulationsbad nach einem der Ansprüche 1 bis 3, ferner umfassend eine Steuerung (32), die konfiguriert ist zum:
Bestimmen der Spannung am Hauptstromeingang;
Vergleichen der Spannung mit einem Schwellenwert;
Einstellen des Tastverhältnisses des Aktivierungssignals auf einen ersten Wert als Reaktion darauf, dass die Spannung unter dem Schwellenwert liegt; und
Einstellen des Tastverhältnisses des Aktivierungssignals auf einen zweiten Wert, der sich vom ersten Wert unterscheidet, als Reaktion darauf, dass die Spannung nicht unter dem Schwellenwert liegt.

8. Verfahren zum Betreiben eines Rezirkulationsbades, wobei das Verfahren Folgendes umfasst:
Bestimmen einer Spannung eines Wechselstroms an einer Hauptleistungsaufnahme des Rezirkulationsbades mit einer Steuerung (32);
Einstellen, mittels der Steuerung, eines Tastverhältnisses eines Aktivierungssignals basierend auf der Spannung;
selektives Koppeln eines Heizelements mit der Hauptleistungsaufnahme durch die Steuerung, die das Aktivierungssignal erzeugt;
Erzeugen einer Gleichspannung mittels einer mit der Hauptleistungsaufnahme gekoppelten Leistungseinheit, die einen Wert aufweist, der im Wesentlichen unabhängig von der Spannung des Wechselstroms an der Hauptleistungsaufnahme ist; und
selektives Koppeln eines Gleichstrommotors mit der Gleichspannung, wobei der Gleichstrommotor Drehmoment für mindestens eines von einem Verdichter, einer Umwälzpumpe oder einem Ventilator als Reaktion auf die Kopplung an die Gleichspannung bereitstellt.

9. Verfahren nach Anspruch 8, wobei das Einstellen des Tastverhältnisses des Aktivierungssignals basierend auf der Spannung Folgendes umfasst:
Vergleichen der Spannung mit einem Schwellenwert;
Einstellen des Tastverhältnisses des Aktivierungssignals auf einen ersten Wert als Reaktion darauf, dass die Spannung unter dem Schwellenwert liegt; und
Einstellen des Tastverhältnisses des Aktivierungssignals auf einen zweiten Schwellenwert, der sich von dem ersten Schwellenwert unterscheidet, als Reaktion darauf, dass die Spannung nicht unter dem Schwellenwert liegt.

10. Verfahren nach Anspruch 8 oder 9, ferner umfassend:
Empfangen eines Temperatursignals an der Steuerung, wobei das Temperatursignal eine Temperatur einer Arbeitsflüssigkeit anzeigt;
Vergleichen der Temperatur der Arbeitsflüssigkeit mit einer gewünschten Temperatur; und
Bestimmen einer Zeitspanne zum Erzeugen des Aktivierungssignals basierend auf dem Vergleich.

## Revendications

1. Bain de recirculation (10) comprenant:
une alimentation électrique principale (66) conçue pour recevoir un courant alternatif ;
un élément chauffant (30) couplé sélectivement à l'alimentation électrique principale en réponse à un signal d'activation, le signal d'activation ayant un cycle de service fixé sur la base d'une tension du courant alternatif au niveau de l'alimentation électrique principale (40), et
une unité d'alimentation ayant une entrée et une sortie, l'entrée étant couplée à l'alimentation électrique principale, la sortie fournissant au moins une tension en courant continu ayant une valeur substantiellement indépendante de la tension du courant alternatif au niveau de l'alimentation électrique principale, la tension en courant continu fournissant de l'énergie à un moteur en courant continu (34) qui est sélectivement couplé à la sortie de l'unité d'alimentation, le moteur en courant continu fournissant un couple à au moins un élément parmi un compresseur (44), une pompe de recirculation (28) et un ventilateur (50) en réponse à son couplage à la sortie de l'unité d'alimentation.

2. Bain de recirculation selon la revendication 1, comprenant en outre :
un réservoir (16) pour recevoir un liquide de travail ; et
une unité de refroidissement (38) pour refroidir le liquide de travail, l'unité de refroidissement incluant le compresseur et un serpentin d'évaporateur (42).

3. Bain de recirculation selon la revendication 1, comprenant en outre :
un réservoir (16) pour recevoir un liquide de travail ; et
la pompe de recirculation pour faire recirculer le liquide de travail, la pompe de recirculation étant une pompe immergée (28) située dans le réservoir.

4. Bain de recirculation selon l'une quelconque des revendications 1 à 3, comprenant en outre un contrôleur (32) configuré pour :
déterminer la tension du courant alternatif au niveau de l'unité d'alimentation principale ;
fixer le cycle de service du signal d'activation en fonction de la tension déterminée ; et
coupler sélectivement l'élément chauffant à l'unité d'alimentation principale en utilisant le signal d'activation.

5. Bain de recirculation selon la revendication 4, comprenant en outre une commande de chauffage (36) connectée entre l'élément chauffant (30) et l'alimentation électrique principale (66), le contrôleur couplant sélectivement l'élément chauffant à l'alimentation électrique principale en appliquant le signal d'activation à la commande de chauffage.

6. Bain de recirculation selon la revendication 4 ou 5, comprenant en outre :
un réservoir (16) destiné à recevoir un liquide de travail, le contrôleur (32) étant configuré pour coupler sélectivement l'élément chauffant à l'entrée d'alimentation principale (66) afin de maintenir le liquide de travail à une température désirée.

7. Bain de recirculation selon l'une quelconque des revendications 1 à 3, comprenant en outre un contrôleur (32) configuré pour :
déterminer la tension au niveau de l'unité d'alimentation principale ;
comparer la tension à un seuil ;
en réponse à une tension inférieure au seuil, fixer le cycle de service du signal d'activation à une première valeur ; et
en réponse à une tension non inférieure au seuil, fixer le cycle de service du signal d'activation à une seconde valeur différente de la première valeur.

8. Procédé de fonctionnement d'un bain de recirculation, le procédé comprenant de :
déterminer, avec un contrôleur (32), une tension d'un courant alternatif au niveau d'une alimentation électrique principale du bain de recirculation ;
fixer, avec le contrôleur, un cycle de service d'un signal d'activation en fonction de la tension ;
coupler sélectivement un élément chauffant à l'alimentation électrique principale par le contrôleur qui génère le signal d'activation ;
générer, avec une unité d'alimentation couplée à l'unité d'alimentation principale, une tension en courant continu ayant une valeur sensiblement indépendante de la tension du courant alternatif au niveau de l'alimentation électrique principale ; et
coupler sélectivement un moteur en courant continu à la tension en courant continu, le moteur en courant continu fournissant un couple à au moins un élément parmi un compresseur, une pompe de recirculation et un ventilateur en réponse à son couplage à la tension en courant continu.

9. Procédé selon la revendication 8, dans lequel fixer le cycle de service du signal d'activation en fonction de la tension comprend de :
comparer la tension à un seuil ;
en réponse à une tension inférieure au seuil, fixer le cycle de service du signal d'activation à une première valeur ; et
en réponse à une tension non inférieure au seuil, fixer le cycle de service du signal d'activation à une seconde valeur différente de la première valeur.

10. Procédé selon la revendication 8 ou 9, comprenant en outre de :
recevoir un signal de température au niveau du contrôleur, le signal de température indiquant une température d'un liquide de travail ;
comparer la température du liquide de travail à une température désirée ; et
déterminer une durée nécessaire pour générer le signal d'activation en fonction de la comparaison.
